Europäisches Patentamt

European Patent Office                    (11) Publication number:          0 272 241

Office européen des brevets                                              A2

(12)                          EUROPEAN PATENT APPLICATION

(21) Application number: 87870182.0          (51) Int. Cl.⁴: **C08L 51/04 , C08L 77/00**

(22) Date of filing: **16.12.87**

---

(30) Priority: **19.12.86 US 944648**

(43) Date of publication of application:
**22.06.88 Bulletin  88/25**

(84) Designated Contracting States:
**AT BE CH DE ES FR GB GR IT LI LU NL SE**

(71) Applicant: **Monsanto Company**
**Patent Department 800 North Lindbergh**
**Boulevard**
**St. Louis Missouri 63167(US)**

(72) Inventor: **Lavengood, Richard Eugene**
**134 Wenonah Road**
**Longmeadow Massachusetts 01106(US)**
Inventor: **Padwa, Allen Robert**
**6 Congress Street**
**Worcester Massachusetts 01609(US)**

(74) Representative: **McLean, Peter et al**
**Monsanto Europe S.A. Patent Department**
**Avenue de Tervuren 270-272 Letter Box No 1**
**B-1150 Brussels(BE)**

---

(54) **Color stable polymer blend.**

㊐ Polymer blends resistant to U.V. light exposure comprise graft rubber compositions based on saturated rubber substrates and an effective amount of polyamide to provide U.V. resistance. Such blends especially provide color stability to U.V. light.

FIG. 1.

## COLOR STABLE POLYMER BLEND

This invention relates to color stable polymer blends and more particularly to graft rubber compositions having improved resistance to color degradation from ultraviolet (U.V.) light.

Graft rubber compositions, e.g. comprising thermoplastic polymer grafted onto saturated rubber substrate, are known to exhibit desirable physical properties. Such graft rubber compositions also exhibit favorable weatherability, i.e. the ability to retain desirable properties, such as impact strength, on extended exposure to environmental effects such as extremes in temperature, humidity and exposure to U.V. light, e.g. from solar radiation. Despite the generally good weatherability of such graft rubber compositions, many applications have high standards for color stability in severe U.V. light exposure that cannot be met by such graft rubber compositions.

An object of this invention is to provide a color stable polymer blend comprising graft rubber compositions of thermoplastic polymer grafted onto saturated rubber substrates.

Another object of this invention is to provide such polymer blends without adversely affecting other desirable physical properties such as impact strength.

These and other objects, which will be readily apparent from the following detailed description on this invention in which it has been surprisingly discovered that the addition of a polyamide resin (a material not known for color stability on exposure to U.V. light) greatly enhances the color stability of graft rubber compositions of thermoplastic polymer grafted onto saturated rubber substrates.

## SUMMARY OF THE INVENTION

The present invention provides U.V. resistant polymer blends and molded or extruded parts prepared from the blends comprising:

(A) 20 to 80 weight percent of graft rubber composition comprising a graft copolymer of from 15 to 85 parts by weight of at least one polar monomer selected from the group consisting of $C_1$ to $C_4$ alkyl acrylates, $C_1$ to $C_4$ alkyl methacrylates, methacrylonitrile and acrylonitrile and from 85 to 15 parts by weight of a vinylaromatic monomer, wherein the monomers are polymerized in the presence of and grafted onto a saturated rubber substrate having a glass transition temperature below 0°C, wherein the weight percentage of the rubber is in the range from 5 to 80 percent and the weight percentage of the graft copolymer is in the range of 95 to 20 percent of the graft rubber composition;

(B) 70 to 19 weight percent of polyamide resin;

(C) 0.5 to 20 weight percent of compatibilizer polymer comprising vinyl aromatic monomer, polar monomer and functionalized monomer capable of reaction with the polyamide resin, wherein the concentration of functional monomer is in the range of 0.05 to 4 mole percent;

(D) 0.1 to 4 weight percent of stabilizer comprising U.V. absorber, peroxide decomposer or a mixture thereof; and

(E) 0 to 30 weight percent of an acid-containing acrylate copolymer rubber.

Saturated rubber substrates of the graft rubber composition preferably include EPDM rubber, alkyl acrylate rubber or mixtures thereof. A more preferred aspect of this invention employs saturated alkyl acrylate rubber substrate in the graft rubber composition.

The graft rubber composition of the blends of this invention is preferably at least about 50 weight percent of graft copolymer having a saturated rubber substrate, e.g. about 80 weight percent or higher, in some cases 100 weight percent.

For example, the blends preferably contain low amounts, if any, of graft rubber compositions based on unsaturated rubber substrates such as butadiene-based rubber substrates which exhibit poor weatherability. Where unsaturated rubber substrates are used, e.g. for ease of processing or other reasons, it is preferred that the unsaturated rubber substrate be at low levels, say about 15 weight percent or lower.

## BRIEF DESCRIPTION OF THE DRAWINGS

Figures 1 and 3 graphically illustrate the color stability of polymer blends of this invention exposed to U.V. light.

Figure 2 graphically illustrates the retention of mechanical properties of polymer blends of this invention exposed to U.V. light.

## DETAILED DESCRIPTION OF PREFERRED EMBODIMENTS

### The Graft Rubber Composition:

Alkyl acrylate rubbers useful in the graft rubber composition of the blend of this invention can comprise crosslinked, i.e. at least partially crosslinked, acrylic polymers or copolymers having a glass transition temperature, Tg, preferably less than 0°C which can be polymerized by free radical initiated emulsion techniques. Crosslinking of these particles allows them to retain their size and shape during subsequent polymer processing steps. Inclusion of a polyfunctional ethylenically unsaturated monomer during polymerization facilitates crosslinking. Crosslinked rubber is substantially insoluble in organic solvents such as tetrahydrofuran and cyclo hexanone at ambient temperatures.

Examples of acrylic rubbers that can be used include the crosslinked polymers of the $C_2$-$C_{10}$ alkyl acrylate and the $C_8$-$C_{22}$ alkyl methacrylate monomers, preferably the $C_4$-$C_8$ alkyl acrylates, such as poly (2-ethylhexyl acrylate), amd more preferably butyl acrylate. At least one acrylate monomer is utilized in this step. If desired, the monomer charge may contain small amounts, i.e., 1 to 20 wt. % of the amount of acrylate monomer, of optional monomers including styrene, acrylonitrile, methacrylonitrile, methyl methacrylate, methacrylic acid, acrylic acid, vinylidene chloride, vinyl toluene acrylate monomer.

In order to crosslink the acrylate monomer from about 0.05 to about 10 wt. %, preferably 0.1 to 5 wt. %, based on the weight of acrylate monomer of at least one crosslinking agent is used during polymerization. For purposes of this invention, such crosslinking agent should be a di-or polyfunctional ethylenically unsaturated monomer having at least one vinyl group of the formula: $H_2C = CR$ - wherein R is hydrogen or lower alkyl. As is well known in the art, the vinyl groups on the crosslinking monomer can be the same (e.g., divinyl benzene, trimethylol propane triacrylate, etc.) or different, (e.g., allyl methacrylate, diallyl fumarate, diallyl maleate, etc.) Examples of other suitable crosslinking agents which are known to persons in the art and which can be used are 1,3-butylene dimethacrylate, diethylene glycol dimethacrylate, ethylene glycol dimethacrylate, trimethylolpropane trimethacrylate, methylene bisacrylamide, diethylene glycol diacrylate, ethylene glycol diacrylate, divinyl ether, diallyl phthalate, divinyl sulfone, divinyl sorbitol, triethylene glycol dimethacrylate, trimethylene glycol diacrylate, butylene glycol diacrylate, butylene glycol dimethacrylate, pentamethylene glycol diacrylate, glyceryl triacrylate, octylene glycol diacrylate, trimethylolpropane triacrylate, the tetraacrylate ester of pentaerythritol and various diallyl phosphonates.

Optionally, a grafting agent may be used during polymerization formation of the acrylate rubber. Such agents have two or more addition polymerizable unsaturated reactive groups which participate in the polymerization reaction at substantially different rates. These agents and their application are more fully described in U.S. Patent 3,843,753, column 5 line 11 - column 9 line 17, which is incorporated herein by reference.

Optimum results are obtained by the use of a crosslinked copolymer containing from about 95 to 99.9 wt. % of n-butyl acrylate and from about 0.1 to 5 wt. % of butylene glycol diacrylate.

The emulsifier which is used in polymerizing the alkyl acrylate is at least one of the following conventional types: an anionic emulsifier, e.g., the $C_2$-$C_{22}$ carboxylic acids, the sulfates or sulfonates of $C_6$-$C_{22}$ alcohols or alkyl phenols; a non-ionic emulsifier, e.g., the addition products of alkylene oxides to fatty acids, amines or amides; a combination of the foregoing anionic and non-ionic emulsifiers; or the cationic emulsifiers, e.g., a quaternary ammonium containing compound. The amount of emulsifier present should be from about 0.5 to about 5 wt. % in the emulsion.

An initiator is also present in the emulsion in an amount ranging from about 0.005 to 2 wt. % of the acrylate monomer. Suitable for use are water-soluble peroxidic compounds, e.g., hydrogen peroxide and alkali metal and ammonium persulfates, oil soluble organic peroxides and azo compounds, e.g., benzoyl peroxide, azobisisobutyronitrile and the like, used singly or in combination. Redox catalysts, e.g., mixtures of peroxidic catalysts with reducing agents, such as hydrazine, alkali metal bisulfites, thiosulfates, and hydrosulfites, and soluble oxidizable sulfoxyl compounds can also be used.

A chain transfer agent such as an alkyl mercaptan, e.g., t-dodecyl mercaptan, toluene, xylene, chloroform, halogenated hydrocarbons, terpinolene, and the like may also be used.

A buffer to keep the pH at 6.0 or higher is a final component of the emulsion.

Methods for making these acrylate copolymers are well-known and need not be described here (see, e.g., U.S. Patent 3,944,631, incorporated herein by reference).

Vinylaromatic monomers used for the graft rubber composition include styrene, and substituted styrenes such as alpha-methyl styrene, chlorostyrene, bromostyrene, p-methyl styrene, and vinyl toluene. The weight ratio of vinylaromatic monomer to polar monomer in the graft copolymer is preferably in the range of 20:80 to 80:20 and the weight percent of the rubber is preferably in the range of 5 to 60 percent of the total weight of the graft rubber composition. When the vinylaromatic monomer is styrene and the polar monomer is acrylonitrile, a more preferred weight ratio of styrene to acrylonitrile is in the range of 80:20 to 50:50. The ratio of comonomers of the graft copolymer is preferably selected so that the ungrafted copolymer fraction has a tensile modulus of at least 25,000 psi, more preferably at least 50,000 psi. Advantageously graft polymerization conditions are selected to provide a grafted copolymer fraction, i.e., graft efficiency of at least 20 weight percent and preferably at least 40 weight percent of the total copolymer present in the graft rubber composition, and provided the grafted copolymer fraction is maintained above 20 weight percent, the graft copolymer may be diluted by addition of separately prepared copolymer of vinyl aromatic monomer and polar monomer. Graft polymerization conditions are advantageously selected to provide a copolymer of weight average molecular weight less than 200,000 and preferably less than 150,000 measured on the ungrafted fraction by gel permeation chromatography as hereinafter described. The particle size of the rubber graft composition is advantageously in the range of 0.05 to 1.0 microns, preferably 0.1 to 0.5 microns.

It is expected that one skilled in the art can apply grafting procedures to other saturated rubber substrates, e.g. EPDM rubber, to provide similar graft rubber compositions.

### The Polyamide Resin:

The polyamide resin can comprise nylon 6 (polycaprolactam), nylon 11 (poly 11-aminoundecanoic acid), nylon 12 (poly lauryl lactam), nylon 6,6 (poly hexamethylene adipamide), nylon 6,9 (poly hexamethylene azelamide) nylon 6,10 (polyhexamethylene sebacamide) nylon 6,12 (poly hexamethylene dodecanodiamide), nylon 4 (poly $\gamma$-butyrolactam), nylon 7 (poly 7-aminoheptanoic acid) nylon 8 (poly 8-aminocaprylic acid) nylon 10,6 (poly decamethylene adipamide) and numerous partially aromatic nylons (PARNs). PARNs result when an aromatic residue or unit is substituted in whole or in part for an aliphatic residue or unit in an aliphatic nylon polymer. For example, substitution of all of the adipic acid [HOOC-$(CH_2)_4$-COOH] residues in nylon 6,6 by those from mixtures of about 30-60 percent terephthalic acid 70-40 percent isophthalic acid gives suitable PARNs which are high-melting, partly crystalline nylons 6,TA-co-6, IA or poly(hexamethylene tere-co-isophthalamides). Other suitable PARNs are partly crystalline nylons. Also suitable are various types of copolyamides, block copolymers, and graft copolymers. The preferred polyamide resins are nylon 6, nylon 6,6 and random copolymers of nylon 6,6 and nylon 6.

The amount of polyamide is desirably less than about 70 weight percent of the polymer blend which generally avoids having a blend of continuous phase of polyamide with dispersed graft rubber composition; such blends tend to exhibit poor color stability typical of nylon polymers.

### The Compatibilizer Polymer:

Since polyamides are generally neither miscible nor compatible with the graft copolymer, e.g. styrene-acrylonitrile copolymer of the graft rubber composition, it is necessary to provide a compatibilizer polymer which is miscible (preferably substantially miscible) with the graft copolymer. In the generally accepted sense, two polymers are miscible when they form a single phase, solid solution. Miscibility of a blend of polymers may be confirmed by a single glass transition temperature for the blend, measured by calorimetry or dynamic mechanical analysis, or by optical clarity of the blend. The compatibilizer polymer allows for retention of desirable physical properties of the blend and in many cases provides enhanced physical properties, e.g. impact strength, greater than those of any one component of the blend.

The compatibilizer polymer comprises vinyl aromatic monomer, polar monomer and functionalized monomer capable of reaction with the polyamide resin. For instance, compatibilizer contains from about 0.05 to about 4.0 mole percent of a functionalized monomer containing a functional group which reacts with the amine or carboxylic acid groups of the polyamide and preferably from about 0.1 to about 3 mole percent, preferably selected to provide a concentration of functional group in the range of 1 to 10 functional groups per average molecule of compatibilizer polymer. The functional monomer can be a carboxylic acid such as acrylic or methacrylic acid of $C_1$ to $C_{12}$ monalkyl esters of diacids such as monomethyl maleate and mono-dodecyl fumarate, a dicarboxylic acid such as fumaric acid, maleic acid, itaconic acid, aconitic acid or citraconic acid, an anhydride, such as maleic, itaconic, aconitic or citraconic anhydride, or with an epoxide such as glycidyl acrylate, glycidyl methacrylate or allyl glycidyl ether or other monomers containing similar functional groups.

The compatibilizer polymer preferably comprises vinylaromatic monomer and polar monomer in a

4

proportion not too different from the proportion of those monomers in the graft copolymer to afford miscibility with the graft copolymer. Preferably the weight percent vinyl aromatic monomer in the compatibilizer polymer is within seven (7) percentage points of the vinyl aromatic monomer in the graft copolymer. More preferably, the weight percents of vinyl aromatic monomer are within five (5) percentage points.

The compatibilizer polymer preferably has a number average molecular weight of about 21,000 and preferably at least about 30,000 and a weight average molecular weight of at least about 40,000 and preferably at least about 60,000. The molecular weights are conveniently measured by gel permeation chromatography. While in principle the molecular weight can be extremely high, it is advantageous to have a weight average less than 200,000 to provide ease of processing and blending with the other components of the polyblend and preferably less than 100,000.

The preferred compatibilizer polymer is a terpolymer containing styrene (or α-methylstyrene or p-methylstyrene), acrylonitrile and from about 0.1 to about 3.0 mole percent maleic anhydride. With such a terpolymer miscibility with the graft copolymer of the graft rubber composition is obtained when the graft copolymer also comprises styrene or (α-methyl styrene or p-methyl styrene) and acrylonitrile and the weight percentage of the styrene monomer in the graft copolymer differs from the weight percentage of styrene monomer in the compatibilizer polymer by no more than ±5 units. More preferably the styreneacrylonitrile-maleic anhydride terpolymer contains from about 0.3 to about 1.5 mole percent maleic anhydride; and most preferably about 1 mole percent maleic anhydride.

The preferred amount of compatibilizer polymer in the blend is in the range of 1 to 15 weight percent; more preferably, in the range of 4 to 12 weight percent; and even more preferably, in the range of 6 to 10 weight percent.

The Stabilizer

To afford the desired weatherability, especially resistance to U.V. light, the polymer blend also comprises up to about 4 weight percent stabilizer comprising U.V. absorbers, peroxide decomposers or a mixture thereof. Useful U.V. absorbers include hydroxybenzotriazoles, such as 2(2'-hydroxy-5'-methyl phenyl)benzotriazole and 2(2'-hydroxy-3',5'-diisoamyl phenyl)benzotriazole available as Tinuvin® P and Tinuvin® 328, respectively, from Ciba-Geigy Corp., hydroxybenzophenones and formamidines.

Useful peroxide decomposers include hindered amines (commonly known as HALS: hindered amine light stabilizers) such as bis (methyl piperridinyl) sebacates, metal salts of dithiocarbamates, phosphite esters and other compounds that are preferably generally non-reactive with the polymer materials but are able to decompose peroxides. The amount of U.V. absorber and/or peroxide decomposer can be determined empirically to achieve best results, depending on the pigment type and loading and nature of desired duration of stability. In many cases the blends desirably contain less than 3.5 weight percent of either U.V. absorber and/or peroxide decomposer, preferably less than about 2.0 weight percent.

The polymer blend can also comprise other stabilizing compounds such as antioxidants that afford heat stability during processing.

The Acid-Containing Acrylate Copolymer Rubber

The acid-containing acrylate copolymer rubber optionally useful in the polymer blends of this invention is characterized as having acid groups capable of reaction with the polyamide through its terminal amine groups, and has a glass transition temperature below room temperature. Suitable acid-containing acrylic copolymer rubbers comprise rubbery ethylenically unsaturated carboxylic acid-acrylic ester copolymers. The rubbers contain about 0.5 to 25 mole percent of an interpolymerized acid-containing monomer such as acrylic or methacrylic acid or $C_1$ to $C_{12}$ monalkyl esters of diacids such as monomethyl maleate and monododecyl fumarate, a dicarboxylic acid such as fumaric acid, maleic acid, itaconic acid, aconitic acid or citraconic anhydrode. They are distinguished by their acid functionality from polyacrylate rubbers which generally are essentially non-functionalized acrylic ester polymers. Suitable rubbers include acrylic acid-acrylic ester-alpha-olefin terpolymers which are essentially non-crystalline. The rubber may be prepared by partial hydrolysis of an acrylate-olefin copolymer rubber to obtain the required acid groups. Suitable rubbers are preferably prepared by polymerization of a $C_1$ to $C_{10}$ alkyl acrylate, an alpha-olefin of 2-8 carbon atoms and an acid monomer selected from the group consisting of acrylic acid, methacrylic acid and $C_1$ to $C_4$ monalkyl ester of maleic and fumaric acids. Preferred rubbers are polymers of ethylene, $C_1$-$C_4$ alkyl acrylate

and monoethyl maleate or acrylic acid. More preferred acid functional rubbers are polymers comprising at least 50 mole percent of ethylene, about 10 to 49.5 mole percent $C_1$ to $C_4$ alkyl acrylate, and about 0.5 to 10 mole percent monoethyl maleate or acrylic acid and contribute to significantly enhanced impact properties in the polyblends.

The acid-containing acrylate copolymer rubber is effective to improve impact resistance in the blend in the range of about 1 to about 30 weight percent. The preferred amount of acrylate copolymer rubber in the blend is from 5 to 15 weight percent, and the most preferred amount is 5 to 10 weight percent acrylate copolymer rubber to provide enhanced impact properties.

In addition to the above components the polyblends of the invention can advantageously contain other additives such as plasticizers, flame-retardants, fibers, mineral fibers, mineral fillers, dyes, pigments and the like.

The components of the polyblend can be blended together by any convenient process. Usually however they are extrusion blended or compounded in a high intensity blender such as a Banbury Mixer.

The invention is now described with reference to the following examples which are for the purposes of illustration only and are not intended to imply any limitation on the scope of the invention. The components described below are blended in a number of different ratios and tested for various properties.

COMPONENTS USED

(A) GRC, a graft rubber composition, was prepared by grafting a styrene-acrylonitrile copolymer (SAN) onto a butyl acrylate rubber latex (BA) according to the following procedure:

BA latex was prepared by adding 0.2 parts potassium persulfate (initiator) and 0.07 parts sodium bicarbonate (buffering agent) to 150 parts water at 60-75°C; over 3-5 two streams were successively added over a period of 3-5 hours, viz., the first stream containing 49.5 parts butyl acrylate monomer and 0.5 parts 1,3-butylene glycol dimethacrylate (a crosslinking agent), the succeeding stream containing 48.5 parts butyl acrylate monomer admixed with 0.5 parts 1,3-butylene glycol dimethacrylate and 1.0 part diallyl malleate (a graftlinking agent); two parts Aerosol™ from American Cyanamid (an emulsifier) were metered in simultaneously with the two streams.

The following graft base at 70-80°C was prepared:

|  | parts |
|---|---|
| BA latex (prepared as above) | 250 |
| Water | 250 |
| Potassium Persulfate | 0.05 |
| Sodium Bicarbonate | 0.07 |

A graft copolymer latex was produced as the following mixture was metered into the graft base with stirring over a period of 3-5 hours:

|  | parts |
|---|---|
| Styrene and acrylonitrile at 70/30 S/AN weight ratio containing 0.1 to 0.5 parts tert-dodecyl mercaptan chain transfer agent | 170 |
| Potassium persulfate | 0.2 |
| Dowfax™ 2A1 surfactant from Dow Chemical Co. | 2.0 |

The graft copolymer latex was held for one hour with stirring and then coagulated at 90°C. by the addition of magnesium sulfate. The coagulum was washed and dried to provide a graft rubber composition having a weight average particle diameter of 0.15 microns, a butyl acrylate rubber content of about 38%, and an SAN content of about 62% (about 70% of which is grafted).

(B) SAN, a styrene acrylonitrile copolymer, was prepared according to the following procedure:

A liquid monomer stream of 67.5/32.5 parts styrene/acrylonitrile and 0.22 parts terpinolene were continuously charged for about 0.9 hour to a mixed reaction zone held at 168°C. which was maintained about 65 vol. % filled with liquid, with the vapor phase of unreacted monomers above in substantial equilibrium with the liquid phase. The liquid phase was continuously removed, and devolatilized to provide a copolymer of 67.5/32.5 wt. % polymerized styrene/acrylonitrile.

(C) NYLON-6, a polycaprolactam, identified as Nycoa™ 525 was obtained from Nylon Corp. of America.

(D) CT, a compatibilizer terpolymer of styrene, acrylonitrile and maleic anhydride (weight ratio 67:32:1), was prepared by polymerizing a mixture of the three monomers. The terpolymer had a weight average molecular weight in the range from about 60,000 to 100,000 (determined by gel permeation chromatography).

(D) VAMAC, an acid-functionalized acrylate rubber, identified as VAMAC™ G obtained from E. I. duPont de Nemours & Co., is a terpolymer of about 73 mole percent ethylene, about 26 mole percent methyl acrylate and about 1 mole percent monoethyl maleate.

(F) Tinuvin® P, a substituted hydroxyphenyl-benzotriazole U.V. light absorber, obtained from Ciba-Geigy Corp., and identified as a 2(2'-hydroxy-5'-methyl phenyl)benzotriazole.

(G) Tinuvin® 770, a peroxide decomposer, is a hindered amine light stabilizer obtained from Ciba-Geigy Corp., and specifically identified as bis(2,2,6,6-tetramethyl-piperridinyl-4) sebacate.

(H) Irganox® 1076, an antioxidant, obtained from Ciba-Geigy Corp., identified as octadecyl 3,5-di-t-butyl-4-hydroxy cinnamate.

Example 1

This example serves to illustrate the preparation of a polymer blend according to the prior art comprising principally a graft rubber composition of a butyl acrylate rubber and SAN copolymer.

Polymer Blend A was prepared by combining about 52.6 parts of GRC with about 47.4 parts of SAN, 1.5 parts of Tinuvin P, 0.5 parts of Tinuvin 770 and 0.3 parts of Irganox 1076 in a Banbury mixer, Model No. 69A4782 (rotor rpm: 100) until the stock temperature reached 199°C. The material was sheeted on a two-roll mill, diced and dried at 60°C, 98 newtons/m² for about 16 hours.

The pelletized polymer was injection molded under conditions indicated in Table 1 into plaques of 2.5 mm thickness.

## TABLE 1

### INJECTION MOLDING

Machine: 28.3 g Arburg 200 "S" Allrounder$^{TM}$ molding machine (Arburg Machinenfabrik, Wurtemburg, Germany) having a general purpose screw with check ring and straight through nozzle

| | Polymer Blends B,C | Polymer Blend A |
|---|---|---|
| Conditions: | | |
| Temperatures(°C): | | |
| Rear Zone | 260 | 257 |
| Center Zone | 260 | 263 |
| Front Zone | 260 | 266 |
| Nozzle | 260 | 282 |
| Mold | 43 | 60-66 |
| Screw Speed (RPM) | 94 | 140 |
| Injection Rate (seconds) | 1.3 | 4.5 |
| Hold & Cooling Time (seconds) | 25-30 | 26 |
| Hydraulic Pressure (kPa): | | |
| Injection | 5510 | 7930 |
| Hold | 4820 | 6200 |
| Back | 345 | 1035 |

### EXAMPLE 2

This example serves to illustrate the preparation of polymer blends according to this invention comprising graft rubber compositions of butyl acrylate rubber and SAN copolymer together with an effective amount of polyamide affording U.V. resistance.

Polymer Blend B was prepared by combining 50 parts of GRC with 6 parts of CT, 1.5 parts of Tinuvin® P, 0.5 parts of Tinuvin® 770 and 0.3 parts of Irganox® 1076 in a Banbury mixer substantially as indicated in Example 2. The pelletized preblended material is then mixed with 44 parts of NYLON-6 in a Killion extruder having a single stage mixing screw (3.8 cm, diameter; 68.6 cm, length) turning at about 100 rpm.

The rear zone of the extruder is heated to about 254°C. with the middle and front zones at about 260°C. The extruder has a 400-600 micron screen pack and a 0.32 cm orifice die (254°C).

Polymer Blend B was extruded into a water bath (at 7.3 Kg/hr) and pelletized.

Polymer Blend C was prepared substantially as indicated above with the following amounts of materials: 30 parts GRC, 8 parts VAMAC, 3 parts CT, 1.5 parts Tinuvin® P, 0.5 parts Tinuvin® 770, 0.3 parts Irganox® 1076 and 59 parts NYLON-6.

### EXAMPLE 4

This example serves to illustrate the color stability of polymer blends according to this invention upon exposure to U.V. light. Opaque (i.e. not pigmented) plaques were prepared from each of Polymer Blend A, B, and C. The plaques were exposed to U.V. light according to the procedures described in ASTM Practice G26-84. The lamp was a water-cooled, 6500 watt Xenon Arc, with borosilicate inner and outer filters, (Model Ci-65 Weatherometer supplied by Atlas Electric Devices Co.). The exposure cycle was (a) 162 minutes of light at 30% RH, 63°C Black Panel Temperature and (b) 18 minutes of light and water spray. The lamp produced irradiance of 0.35 $W/m^2$ at 340 nm; 1 hour of exposure is equivalent to 1.24 $kJ/m^2$.

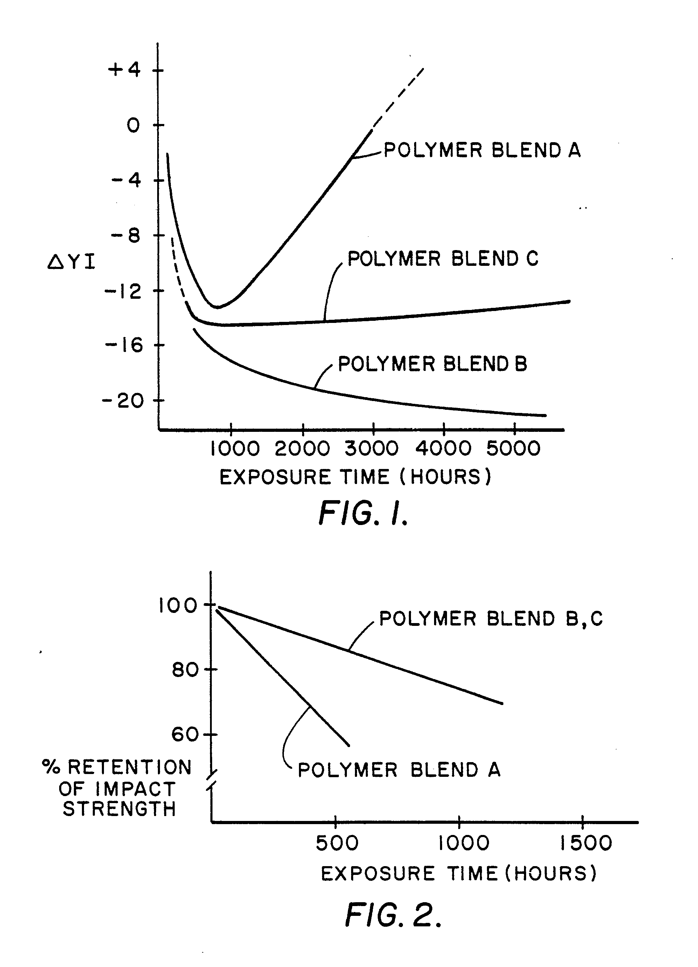

The plaques were periodically evaluated to determine change in color (principally yellow) by spectrophotometric analysis of change in Yellowing Index ($\Delta YI$) determined in accordance with ASTM Practice E 313 using an Applied Color Systems Spectro-Sensor II Spectrophotometer with an Illuminant C light at 2°C. Initially, opaque plaques typically undergo bleaching indicated by negative color change. However, on extended exposure color formation is generally indicated by positive change in color. As indicated in Figure 1, Polymer Blend A exhibited typical color change with initial bleaching followed by positive color production. A change of two units of $\Delta YI$ indicated in on the scale Figure 1 is generally discernable by the human eye.

As further indicated in Figure 1, Polymer Blends B and C containing the polyamide (nylon-6), a polymer not noted for exceptional color stability, exhibited surprisingly advantageous color stability with no positive change in color after the initial bleaching.

## EXAMPLE 5

This Example serves to illustrate that the polymer blends of this invention also exhibit advantageous retention of mechanical properties after exposure to U.V. light.

Samples of Polymer Blends A, B and C, exposed on one side to U.V. light as indicated in Example 4 were periodically evaluated for toughness by dart impacting on the unexposed side. The samples were driven at constant speed (1.86 m/sec) against a dart with a 13 mm hemispherical head.

The results illustrated in Figure 2 show surprisingly that the polymer blends having polyamide exhibit greater resistance to U.V. light degradation of toughness than does a standard weatherable polymer blend.

## EXAMPLE 6

This example serves to further illustrate the color stability to U.V. light exposure of polymer blends according to this invention.

Polymer Blends A' and B' were prepared substantially the same as Polymer Blends A and B, respectively, except that Polymer A' had 1.5 parts of Tinuvin® 328 (Ciba-Geigy) identified as 2(2'-hydroxy-3'5'diisoamyl phenyl) benzotriazole, about 2 parts of aluminum silicate-coated titanium dioxide pigment, and the rubber substrate comprised 15% butadiene and Polymer B' had about 2 parts of titanium dioxide/nylon concentrate pigment. The pigment serves to mask perceptive bleaching so that generally only positive changes in color (e.g. yellow) are indicated.

Plaques of each of Polymer Blends A' and B' were exposed to U.V. light according to ASTM Practice G26-84. The lamp was a water-cooled 6500 watt Xenon-arc with borosilicate inner and quartz outer filters (Model Ci-65 Weatherometer supplied by Atlas Electric Devices Co.). The lamp produced irradiance of 0.55 $W/m^2$ at 340 nm; 1 hour of exposure is equivalent to 1.98 $kJ/m^2$. The exposure cycle was (a) 3.8 hours of light at 50% RH, 89°C Black Panel Temperature and (b) 1.0 hours dark at 100% RH.

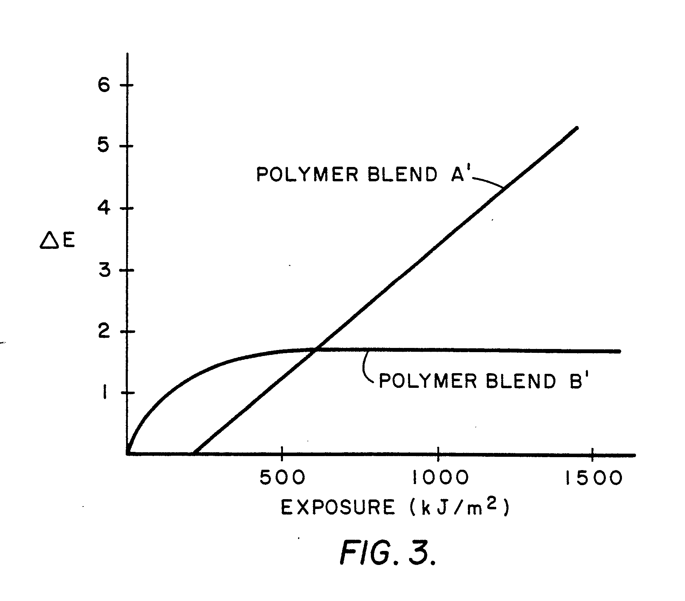

The plaques were periodically evaluated to determine positive change in color by spectrophotometric analysis measuring CIELab Total Color Change ($\Delta E$) using the spectrometer and lamp indicated in Example 4. As indicated in Figure 3, the standard U.V. resistant Polymer Blend A' exhibited linear change in total color change while the nylon stabilized Polymer Blend B' exhibited stability after a minor initial change in total color.

While specific embodiments of the invention have been described, it should be apparent to those skilled in the art that various modifications thereof can be made without departing from the true spirit and scope of the invention. Accordingly, it is intended that the following claims cover all such modifications within the full inventive concept.

## Claims

1. A U.V.-resistant polymer blend comprising:

(A) 20 to 80 weight percent of graft rubber composition comprising a graft copolymer of from 15 to 85 parts by weight of at least one polar monomer selected from the group consisting of $C_1$ to $C_4$ alkyl methacrylates, $C_1$ to $C_4$ alkyl acrylates, methacrylonitrile and acrylonitrile and from 85 to 15 parts by weight of a vinylaromatic monomer, wherein the monomers are polymerized in the presence of and grafted onto a saturated rubber substrate having a glass transition temperature below 0°C, wherein the weight percentage of the rubber is in the range from 5 to 80 percent and the weight percentage of the graft copolymer is in the range of 95 to 20 percent of the graft rubber composition;

(B) 70 to 19 weight percent of polyamide resin;

(C) 0.5 to 20 weight percent of compatibilizer polymer comprising vinylaromatic monomer, polar monomer and functionalized monomer capable of reaction with the polyamide resin, wherein the concentration of functionalized monomer is in the range of 0.05 to 4 mole percent of the compatibilizer polymer;

(D) 0.1 to 4.0 weight percent of stabilizer comprising U.V. absorber, peroxide decomposer or a mixture thereof; and

(E) 0 to 30 weight percent of an acid-containing acrylate copolymer rubber having a glass transition temperature below 0°C

2. The polymer blend of claim 1 where the saturated rubber substrate of said graft rubber composition comprises an alkyl acrylate rubber.

3. The polymer blend of claim 2 wherein said compatibilizer polymer is a terpolymer of a vinylaromatic monomer, an acid-functionalized monomer and a polar monomer selected from the group consisting of $C_1$ to $C_4$ alkyl methacrylates, $C_1$ to $C_4$ alkyl acrylates, methacrylonitrile and acrylonitrile, and wherein the weight ratio of vinylaromatic monomer to polar monomer is in the range of 85:15 to 15:85; and wherein the weight percent of vinylaromatic monomer in said graft copolymer is within 7 percentage points of the weight percent of vinyl aromatic monomer in said terpolymer.

4. The polymer blend of claim 3 wherein said graft rubber composition comprises a graft copolymer of acrylonitrile and a styrene monomer grafted onto butyl acrylate rubber; and wherein said compatibilizer polymer and is a terpolymer of styrene, acrylonitrile and maleic anhydride wherein the styrene: acrylonitrile weight ratio is in the range of 80:20 to 50:50 and the maleic anhydride content is in the range of 1 to 3 mole percent.

5. The polymer blend of claim 2 wherein said polyamide resin is selected from the group consisting of nylon 6, nylon 6,6 and copolymers of nylon 6,6 and nylon 6.

6. The polymer blend of claim 1 comprising 0 to 3.5 weight percent U.V. absorber.

7. The polymer blend of claim 6 wherein said U.V. absorber comprises a hydroxybenzotriazole compound.

8. The polymer blend of claim 1 comprising 0 to 1.5 weight percent peroxide decomposer.

9. The polymer blend of claim 8 wherein said peroxide decomposer comprises a hindered amine light stabilizer compound.

10. The polymer blend of claim 1 wherein up to about 50 weight percent of said graft rubber composition is a graft copolymer of vinylaromatic monomer and polar monomer grafted onto a butadiene substrate rubber.

11. The polymer blend of claim 1 comprising from 1 to 30 weight percent of an acid-containing acrylate copolymer rubber which is a terpolymer of an alpha-olefin, a $C_1$ to $C_4$ alkyl acrylate and an acid monomer.

**FIG. I.**

**FIG. 2.**

FIG. 3.